Europäisches Patentamt

**European Patent Office**

Office européen des brevets

(11) Numéro de publication: **0 063 089**
**B1**

(12) **FASCICULE DE BREVET EUROPEEN**

(45) Date de publication du fascicule du brevet: **27.06.84**

(21) Numéro de dépôt: **82420047.1**

(22) Date de dépôt: **02.04.82**

(51) Int. Cl.³: **A 01 G 25/02**

(54) **Appareillages d'irrigation ponctuelle.**

(30) Priorité: **09.04.81 FR 8107317**

(43) Date de publication de la demande:
**20.10.82 Bulletin 82/42**

(45) Mention de la délivrance du brevet:
**27.06.84 Bulletin 84/26**

(84) Etats contractants désignés:
**AT BE CH DE GB IT LI NL SE**

(56) Documents cités:
**FR - A - 2 257 053**
**FR - A - 2 373 963**
**US - A - 3 199 784**
**US - A - 3 891 150**
**US - A - 4 058 257**

(73) Titulaire: **Bourget, Maurice Lucien, 7 Chemin de Champvillard, F-69540 Irigny (FR)**

(72) Inventeur: **Bourget, Maurice Lucien, 7 Chemin de Champvillard, F-69540 Irigny (FR)**

(74) Mandataire: **Monnier, Guy et al, Cabinet Monnier 142-150 Cours Lafayette, F-69003 Lyon (FR)**

BUNDESDRUCKEREI BERLIN

## Description

La présente invention a trait aux appareillages utilisés pour la mise en oeuvre des systèmes d'irrigation du sol connus sous les termes de »irrigation ponctuelle«, »irrigation localisée« ou encore »irrigation goutte à goutte«.

On sait qu'à l'inverse de l'irrigation classique par aspersion qui cherche à reconstituer artificiellement la pluie naturelle, dans les systèmes d'irrigation ponctuelle l'eau est amenée au point précis d'utilisation, c'est-à-dire en fait au voisinage immédiat de chaque plant; cette alimentation est opérée en très petite quantité et pendant un laps de temps contrôlé, afin d'obtenir l'humidification adéquate du terrain de culture dans la surface strictement nécessaire, moyennant consommation du minimum d'eau.

L'on a proposé en pratique différents appareillages pour l'irrigation ponctuelle, mais les constructions connues sont généralement coûteuses et par ailleurs elles se prêtent mal ou même pas du tout à une ré-utilisation.

Il convient en effet d'observer qu'en principe les appareillages connus comportent une canalisation d'alimentation sur laquelle est branchée une série de dérivations individuelles à faible débit, chacune desdites dérivations étant pourvue à son extrémité libre d'un »goutteur« qui fait office de détendeur et de distributeur goutte à goutte. Bien entendu chacun de ces goutteurs doit être disposé tout près de chaque plant de culture, si bien que l'espacement des dérivations correspond à celui des plants.

On conçoit dans ces conditions qu'un appareillage donné ne peut convenir qu'à un type bien déterminé de cultures en lignes, qu'il s'agisse de cultures horticoles, maraîchères ou arboricoles. Dans certaines constructions l'on peut bien récupérer les dispositifs goutteurs fixés sur une canalisation d'alimentation en caoutchouc ou en matière synthétique, mais par contre cette canalisation principale, perforée par les goutteurs extraits, ne peut être ré-utilisée avec des goutteurs prévus à un espacement différent de celui d'origine (FR-A-2 373 963).

C'est à cet inconvénient que la présente invention entend principalement remédier, et ce à l'aide d'un appareillage perfectionné qui permet en outre de régler ou même d'interrompre, de manière particulièrement aisée, le débit d'écoulement de chacune des dérivations.

L'appareillage suivant l'invention comprend en combinaison d'une part un tuyau principal d'alimentation réalisé en une matière élastiquement déformable et présentant en section transversale au moins une dépression à profil cintré vers l'intérieur s'étendant sur toute la longueur du tuyau, de type en soi connu (FR-A-2 257 053), et d'autre part une série de dérivations individuelles dont chacune est constituée par un petit élément tubulaire à bout acéré en forme de trocart, propre à être branché moyennant un simple enfoncement à force au niveau de la dépression longitudinale précitée du tuyau principal.

On conçoit que les efforts qui s'exercent sur la paroi de ce tuyau lorsqu'il est parcouru par de l'eau sous pression tendent à déformer vers l'extérieur la partie longitudinale à profil cintré de telle sorte que cette déformation agit non seulement pour améliorer l'étanchéité des dérivations, mais encore et surtout pour refermer de manière étanche les perforations résultant du retrait des éléments tubulaires qui constituent lesdites dérivations.

Le dessin annexé, donné à titre d'exemple, permettra de mieux comprendre l'invention, les caractéristiques qu'elle présente et les avantages qu'elle est susceptible de procurer:

Fig. 1 est une coupe schématique illustrant l'agencement d'un appareillage d'irrigation ponctuelle établi conformément à l'invention.

Fig. 2 et 3 sont des coupes transversales du régulateur de débit monté sur la dérivation considérée en fig. 1, suivant les plans indiqués respectivement en II-II et III-III (fig. 1).

Fig. 4 reproduit fig. 1 après fermeture du régulateur et interruption de la circulation de l'eau dans le tuyau principal.

Fig. 5 illustre une variante de réalisation du régulateur.

Fig. 6 montre une autre forme de réalisation de chacune des dérivations.

Fig. 7 est une coupe longitudinale d'un appareillage réalisé suivant un autre mode de mise en oeuvre de l'invention.

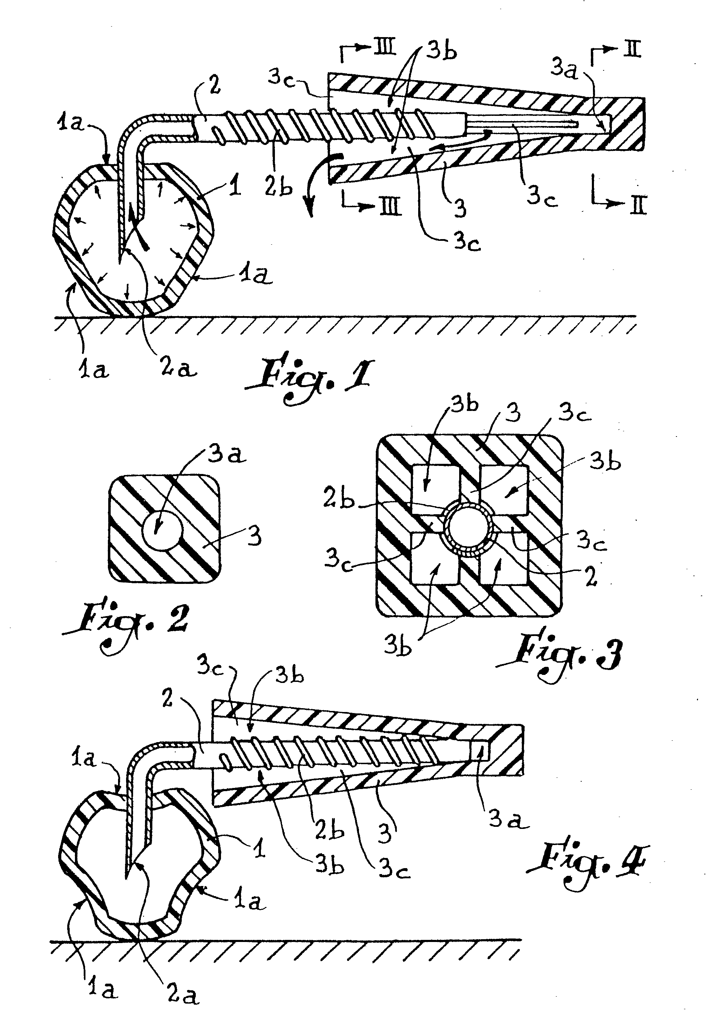

L'appareillage illustré en fig. 1 à 4 comprend un tuyau souple 1 réalisé en un caoutchouc ou en une matière synthétique présentant une certaine élasticité. Fig. 4 montre la section de ce tuyau 1 à l'état de repos, c'est-à-dire lorsqu'il n'est soumis à aucune pression intérieure, et l'on notera que cette section n'est pas parfaitement circulaire, en ce sens qu'elle comporte des dépressions 1a, au nombre de trois dans l'exemple de réalisation envisagé, à profil cintré vers l'intérieur, lesdites dépressions s'étendant bien entendu sur toute la longueur du tuyau, préférablement réalisé par extrusion.

A ce tuyau 1 sont associées des dérivations individuelles dont chacune est constituée par un petit élément tubulaire 2 à profil en équerre, dont une extrémité est coupée en biseau à la manière d'un trocart, comme montré en 2a. On conçoit que cette extrémité acérée 2a permet l'enfoncement à force de chaque petit tube 2 dans la paroi du tuyau 1, étant remarqué que cet enfoncement doit être effectué au niveau de la partie centrale de l'une quelconque des dépressions ou parties cintrées 1a.

Il convient d'observer que le profil coudé du tube 2 facilite la manipulation de celui-ci lors de la mise en place de la dérivation envisagée, en même temps qu'il limite l'enfoncement en évitant tout risque de transpercement accidentel du tuyau 1. Ce profil en équerre permet également à la dérivation de s'auto-orienter librement au contact du sol lorsque le tuyau 1 est déplacé, cette liberté d'orientation s'opposant à l'arrachement des tubes 2 lors de tractions exercées sur ledit tuyau.

On comprend que lorsque le tuyau principal 1 est alimenté en eau sous pression, sa paroi est soumise à un effet de gonflement (schématisé en fig. 1 sous la forme de petites flèches) qui tend à déformer vers l'extérieur les dépressions longitudinales 1a. Cet effort améliore évidemment l'étanchéité du raccordement autour de la paroi de chaque tube coudé 2. Par ailleurs et surtout, si l'on suppose que ce tube 2 a été extrait du tuyau 1 afin de modifier l'espacement mutuel des dérivations en vue d'adapter l'appareillage à un autre type de culture, le gonflement dû à la pression interne referme la perforation antérieurement pratiquée et s'oppose à toute fuite intempestive, même dans le cas où l'alimentation en eau du tuyau principal serait effectuée sous une pression relativement élevée. Cette disposition particulière facilite la ré-utilisation de l'appareillage suivant l'invention.

Le débit d'eau qui traverse chaque dérivation peut être très faible moyennant l'emploi de tubes 2 à très petit diamètre, si bien que sans détendeur l'on est en mesure d'obtenir une irrigation ponctuelle ou goutte à goutte entièrement satisfaisante. Toutefois, quand on désire pouvoir modifier le débit de chaque dérivation sans toucher à la pression de l'eau qui circule dans le tuyau principal, on aura avantage à recourir à un régulateur monté sur l'extrémité libre des tubes coudés 2.

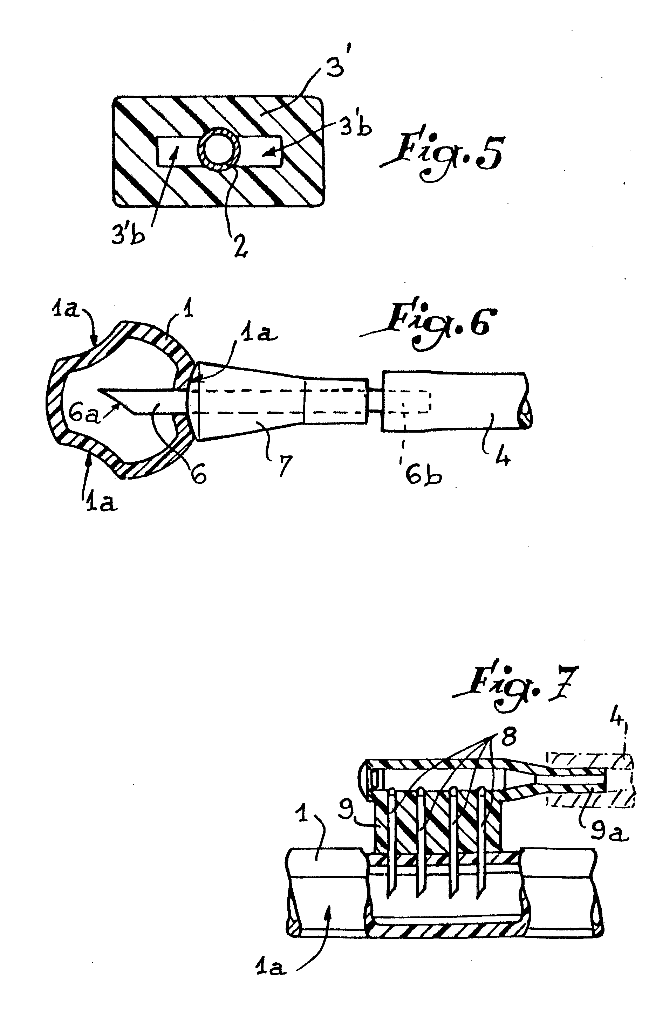

En fig. 1 à 4 ce régulateur est constitué par un corps 3 à profil substantiellement pyramidal, percé axialement d'un alésage 3a (fig. 2) dont l'extrémité tournée vers le sommet du profil précité est établie à une section circulaire de rayon légèrement inférieur au rayon extérieur du tube 2; cet alésage 3a va en s'évasant pour déterminer quatre canaux 3b (fig. 3) séparés les uns des autres par des cloisons 3c, lesquelles ménagent un espace libre suffisant pour le vissage, dans le bord terminal desdites cloisons, du tube 2 pourvu à cet effet d'un filet hélicoïdal 2b (fig. 1).

On comprend que lorsque le corps 3 se trouve à une position telle que celle illustrée en fig. 1, l'eau qui sort de l'extrémité du tube 2 peut s'écouler à l'extérieur à travers les canaux 3b qui forment en outre brise-jet. Pour régler le débit il suffit de visser ou de dévisser le corps 3 sur le tube 2 afin de modifier la section utile découverte par l'extrémité de ce tube dans les canaux précités. A la position de fig. 4 l'écoulement est complètement arrêté, le bord terminal du tube 2 étant appliqué de manière étanche contre la paroi de l'alésage 3a.

Dans la variante de fig. 5 on a supposé que le corps du régulateur, référencé 3', était agencé pour ne comporter que deux canaux intérieurs 3'b. Le fonctionnement reste identique.

Pour certaines applications il peut se révéler avantageux de faire comporter au petit élément tubulaire qui constitue chaque dérivation un tube souple tel que celui montré en 4 en fig. 6, ledit tube souple étant raccordé par simple emmanchement. Ce tube souple 4 permet ainsi d'assurer l'irrigation ponctuelle d'un plant situé à une certaine distance du tuyau principal 1, son extrémité étant retenue en place à l'aide d'un support quelconque.

Dans la forme de réalisation envisagée en fig. 6 chaque dérivation comprend un élément tubulaire 6 à profil rectiligne, solidaire d'un corps 7 qui permet la manipulation aisée dudit élément tout en limitant l'enfoncement de celui-ci dans le tuyau principal 1. Les extrémités de cet élément 6 dépassent de part et d'autre du corps 7, l'extrémité 6a étant prévue biseautée tandis que l'extrémité opposée 6b reçoit par emmanchement le tube souple 4 sus-décrit ou un régulateur du genre de celui illustré en fig. 1 à 4.

Fig. 7 montre une autre forme de réalisation pour certaines au moins des dérivations individuelles. Chacune de celles-ci comprend plusieurs tubes métalliques droits 8 solidaires d'un corps unique 9 agencé de manière à former collecteur pour un même orifice de sortie 9a, orienté parallèlement au tuyau principal 1. Le débit à travers l'orifice 9a correspond évidemment à la somme des débits élémentaires à travers chaque tube 8.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents. On conçoit en particulier que chaque élément tubulaire peut être agencé pour émettre un ou plusieurs jets à la place de l'écoulement goutte à goutte ci-dessus exposé.

**Revendications**

1. Appareillage d'irrigation ponctuelle, du genre comprenant une canalisation principale (1) pour l'alimentation d'une série de dérivations à écoulement goutte à goutte ou équivalents, chacune desdites dérivations comprenant un petit élément tubulaire (2, 6, 8) pointu pour être branché sur la canalisation précitée moyennant simple enfoncement à force dans celle-ci, caractérisé en ce que la canalisation principale est constituée par un tuyau (1) en une matière élastiquement déformable, présentant en section transversale, lorsqu'il n'est soumis à aucune pression interieure, au moins une dépression (1a) à profil cintré vers l'intérieur s'étendant sur toute la longueur du tuyau, de type en soi connu, tandis que chaque élément tubulaire (2, 6, 8) est agencé à la manière d'un trocart (2a, 6a) sur son esctrémité propre à être enfoncée au niveau de la dépression susmentionnée de la canalisation, la déformation de cette dépression par gonflement sous l'effet de la pression de l'eau provoquant l'obturation automatique des perforations antérieurement déterminées dans cette canalisation par les éléments tubulaires éventuellement extraits.

2. Appareillage suivant la revendication 1, du genre dans lequel certaines au moins des dérivations sont équipées d'un régulateur de débit, caractérisé en ce que ce régulateur est constitué par un corps (3, 3') vissé par un alésage borgne taraudé (3a) sur l'extrémité libre (2a), prévue filetée à cet effet, de l'élément tubulaire (2) envisagé, lequel alésage comporte un orifice s'évasant pour déterminer des canaux (3b) débouchant à l'air libre de façon à ce qu'en vissant ou dévissant le corps l'on peut modifier jusqu'à l'interrompre l'écoulement de l'eau à travers la dérivation.

3. Appareillage suivant l'une quelconque des revendications 1 et 2, caractérisé en ce que chaque dérivation comprend une série d'éléments tubulaires parallèles (8) qui débouchent dans une partie creuse ou collecteur ménagé dans le corps unique (9) de ladite dérivation, ce corps unique (9) portant les éléments tubulaires précités.

## Patentansprüche

1. Anlage zur punktförmigen Bewässerung mit einem Hauptkanal (1) zur Versorgung einer Reihe von Seitenkanälen, die eine tropfenweise erfolgende Wasserabgabe o. ä. bewirken, wobei jeder Seitenkanal ein kleines rohrförmiges Element (2, 6, 8) aufweist, das zugespitzt ist, so daß es durch einfaches Einschlagen in den Hauptkanal an diesen anschließbar ist, dadurch gekennzeichnet, daß der Hauptkanal durch ein Rohr (1) aus einem verformbaren elastischen Material gebildet ist, welches dann, wenn es keinem Innendruck ausgesetzt ist, im Querschnitt mindestens eine Vertiefung (1a) mit nach innen gewölbtem Profil aufweist, die sich über die gesamte Länge des Rohres erstreckt, wie an sich bekannt, und daß jedes rohrförmige Element (2, 6, 8) an einem Ende die Form eines Trokar (2a, 6a) besitzt, so daß es im Bereich der Vertiefung in den Kanal eingeschlagen werden kann, wobei durch eine durch Aufweitung infolge des Wasserdrucks bewirkte Verformung der Vertiefung automatisch diejenigen Perforationen verschlossen werden, die durch ggf. herausgezogene rohrförmige Elemente vorher im Kanal erzeugt worden sind.

2. Anlage nach Anspruch 1, bei der mindestens einige der Seitenkanäle mit einem Durchflußregler versehen sind, dadurch gekennzeichnet, daß der Regler durch einen Körper (3, 3') gebildet ist, der über eine Gewindesackbohrung (3a) an seinem freien Ende mit dem rohrförmigen Element (2) verschraubt ist, das zu diesem Zweck ein Schraubengewinde aufweist, und daß die Bohrung eine sich erweiternde Öffnung zur Ausbildung von Kanälen (3b) besitzt, die in das Freie münden, so daß der Körper auf- und abschraubbar ist und dadurch der Wasseraustritt über den Seitenkanal variiert bzw. ganz unterbrochen werden kann.

3. Anlage nach einem der Ansprüche 1 und 2, dadurch gekennzeichnet, daß jeder Seitenkanal eine Reihe von parallel angeordneten rohrförmigen Elementen (8) aufweist, die in einen hohlen Bereich oder einen Sammler einmünden, der in dem einheitlichen Körper (9) des Seitenkanals angeordnet ist, wobei dieser Körper die rohrförmigen Elemente trägt.

## Claims

1. Trickle irrigation apparatus of the kind comprising a main conduit for feeding a series of branches for drip or similar flow, each of said branches comprising a small tubular element pointed to penetrate the above mentioned conduit by the simple means of forcing the element in, characterized in that the main conduit is constituted by a pipe (1) of resiliently deformable material, of cross-section such that it is not subject to any interior pressure, at least one internally convex arched depression extending completely along the length of the pipe, of type known per se, such that each tubular element (2, 6, 8) is formed in the manner of a spike (2a, 6a) at its extremity, appropriate for being forced into the wall of said depression of the conduit, the deformation of this depression by inflatio under the effect of the pressure of the water causing automatic sealing of perforations previously made in this conduit when the tubular elements are eventually removed.

2. Apparatus according to claim 1, of the kind in which some at least of the branches are equipped with a flow regulator, characterized in that this regulator is constituted by a body (3') screwed by a threaded blind bore (3a) onto the free end (2a) of the tubular element (2), previously threaded for this purpose, said bore comprising an orifice flaring to define channels (3b) opening to the air in such a way that by screwing in or screwing out of the body one can adjust the flow of water through the branch, to the cut-off point.

3. Apparatus according to either of claims 1 or 2, characterized in that each branch comprises a series of parallel tubular elements (8) which open into a hollow part or collector formed in a single body, said branch and said body (9) carrying the afore mentioned tubular elements.

Fig. 1

Fig. 2

Fig. 3

Fig. 4

**Fig. 5**

**Fig. 6**

**Fig. 7**